# EUROPEAN PATENT SPECIFICATION

(11) **EP 4 212 910 B1**
(45) Date of publication and mention of the grant of the patent: **04.03.2026**
(21) Application number: 22151120.7
(22) Date of filing: 12.01.2022
(51) Int. Cl.: G01S 13/00, G01S 1/08, G01S 1/04

(54) **METHOD FOR CONDUCTING RADIOFREQUENCY SENSING INVOLVING A FIRST RADIOFREQUENCY SENSING STATION AND AT LEAST A SECOND RADIOFREQUENCY SENSING STATION, WHEREIN THE FIRST RADIOFREQUENCY SENSING STATION TRANSMITS A RADIOFREQUENCY SENSING SIGNAL, WHEREIN, AS A RESULT OF THE RADIOFREQUENCY SENSING SIGNAL BEING TRANSMITTED, A RADIOFREQUENCY SENSING RECEPTION SIGNAL IS RECEIVED BY THE SECOND RADIOFREQUENCY SENSING STATION, SYSTEM OR MOBILE COMMUNICATION NETWORK, RADIOFREQUENCY SENSING STATION, PROGRAM AND COMPUTER-READABLE MEDIUM**
VERFAHREN ZUR DURCHFÜHRUNG EINER HOCHFREQUENZABTASTUNG MIT EINER ERSTEN HOCHFREQUENZABTASTSTATION UND MINDESTENS EINER ZWEITEN HOCHFREQUENZABTASTSTATION, WOBEI DIE ERSTE HOCHFREQUENZABTASTSTATION EIN HOCHFREQUENZABTASTSIGNAL SENDET, WOBEI ALS ERGEBNIS DES SENDENS DES HOCHFREQUENZABTASTSIGNALS EIN HOCHFREQUENZABTASTEMPFANGSSIGNAL VON DER ZWEITEN HOCHFREQUENZABTASTSTATION EMPFANGEN WIRD, SYSTEM ODER MOBILES KOMMUNIKATIONSNETZ, HOCHFREQUENZABTASTSTATION, PROGRAMM UND COMPUTERLESBARES MEDIUM
PROCÉDÉ PERMETTANT D'EFFECTUER UNE DÉTECTION DE RADIOFRÉQUENCES IMPLIQUANT UNE PREMIÈRE STATION DE DÉTECTION DE RADIOFRÉQUENCES ET AU MOINS UNE SECONDE STATION DE DÉTECTION DE RADIOFRÉQUENCES, LA PREMIÈRE STATION DE DÉTECTION DE RADIOFRÉQUENCES TRANSMETTANT UN SIGNAL DE DÉTECTION DE RADIOFRÉQUENCES, SUITE À LA TRANSMISSION DU SIGNAL DE DÉTECTION DE RADIOFRÉQUENCES, UN SIGNAL DE RÉCEPTION DE DÉTECTION DE RADIOFRÉQUENCES ÉTANT REÇU PAR LA SECONDE STATION DE DÉTECTION DE RADIOFRÉQUENCES, SYSTÈME OU RÉSEAU DE COMMUNICATION MOBILE, STATION DE DÉTECTION DE RADIOFRÉQUENCES, PROGRAMME ET SUPPORT LISIBLE

(43) Date of publication of application: 19.07.2023
(73) Proprietor: Deutsche Telekom AG, 53113 Bonn (DE)
(72) Inventor: KLATT, Axel, 50999 Köln (DE)
(74) Representative: Schwöbel, Thilo K.

(56) References cited:
- WO-A1-2021/083368
- US-A1- 2021 076 367
- US-A1- 2021 112 541
- US-A1- 2021 385 784
- US-A1- 2021 389 407
- XIAOMI COMMUNICATIONS: "Wireless sensing in NR", vol. TSG RAN, no. Electronic Meeting; 20211206 - 20211217, 29 November 2021 (2021-11-29), XP052097293, Retrieved from the Internet <URL:https://ftp.3gpp.org/tsg_ran/TSG_RAN/TSGR_94e/Docs/RP-213176.zip RP-213176 Wireless sensing in NR.doc> [retrieved on 20211129]
- SEDLACEK PETR ET AL: "An Overview of the IEEE 802.15.4z Standard its Comparison and to the Existing UWB Standards", 2019 29TH INTERNATIONAL CONFERENCE RADIOELEKTRONIKA (RADIOELEKTRONIKA), IEEE, 16 April 2019 (2019-04-16), pages 1 - 6, XP033559945, [retrieved on 20190607], DOI: 10.1109/RADIOELEK.2019.8733537
- JACK LEE (SAMSUNG) ET AL: "IEEE 802.15.4z MAC for Ranging", vol. 802.15 EIR; 802.15.4z, no. 2, 21 December 2018 (2018-12-21), pages 1 - 67, XP068148437, Retrieved from the Internet <URL:https://mentor.ieee.org/802.15/dcn/18/15-18-0621-02-004z-ieee-802-15-4z-mac-for-ranging.pptx> [retrieved on 20181221]

## Description

### BACKGROUND

The present invention relates a method for conducting radiofrequency sensing involving a first radiofrequency sensing station and at least a second radiofrequency sensing station, wherein the first radiofrequency sensing station transmits a radiofrequency sensing signal, wherein, as a result of the radiofrequency sensing signal being transmitted, a radiofrequency sensing reception signal is received by the second radiofrequency sensing station, the radiofrequency sensing reception signal corresponding to or comprising direct path-transmitted radiofrequency sensing signal and/or a reflection of the radiofrequency sensing signal, allowing to derive, based on the radiofrequency sensing reception signal, information regarding transmission channel properties between the first and second radiofrequency sensing station and/or regarding an object that reflects the radiofrequency sensing signal.

Additionally, the present invention relates to a system or a mobile communication network for conducting radiofrequency sensing involving a first radiofrequency sensing station and at least a second radiofrequency sensing station as part of the system or mobile communication network, wherein the first radiofrequency sensing station transmits a radiofrequency sensing signal, wherein, as a result of the radiofrequency sensing signal being transmitted, a radiofrequency sensing reception signal is received by the second radiofrequency sensing station, the radiofrequency sensing reception signal corresponding to or comprising direct path-transmitted radiofrequency sensing signal and/or a reflection of the radiofrequency sensing signal, allowing to derive, based on the radiofrequency sensing reception signal, information regarding transmission channel properties between the first and second radiofrequency sensing station and/or regarding an object that reflects the radiofrequency sensing signal.

Furthermore, the present invention relates to a radiofrequency sensing station for conducting radiofrequency sensing, the radiofrequency sensing station being used as a first radiofrequency sensing station and/or as a second radiofrequency sensing station in a system or in a mobile communication network, or as a part thereof, according to the present invention.

Furthermore, the present invention relates to a program and to a computer-readable medium for conducting network selection and/or cell selection according to the present invention.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G radio access technologies (referring to the different generations of radio access technologies) and typically comprise (or consist of) cells (or radio cells) of one or a plurality of the respective radio access technology/radio access technologies, which are typically organized throughout a country (or a part of or a region within a country) in a repeating pattern of (radio) cells (and associated base station entities) which belong to (or are used by or associated or assigned to) a mobile network operator (MNO).

By means of realizing sensing capabilities in such communication networks, primarily by means of one or a plurality of radiofrequency sensing stations generating and transmitting radiofrequency sensing signals, it is possible to obtain information regarding either transmission channel properties between different stations, especially base station entities, and/or regarding objects from where such radiofrequency sensing signals are reflected.

Even though such sensing capabilities are able to procure further information regarding transmission channels and/or objects, especially moving objects, nearby or in the vicinity of the respective radiofrequency sensing stations, in order to realize such sensing capabilities, additional efforts (in the sense of additional technical equipment and/or in the sense of additional technical procedures) and/or the use of valuable radiofrequency transmission resources of the air interface of the mobile communication network are typically required. Hence, a manner is required to maximize the possibility to obtain additional information while simultaneously to minimize the additional efforts and/or the use of transmission resources of the air interface. US 2021/112541, US 2021/385784 and US 2021/389407 disclose positioning and wireless sensing techniques to determining user equipment position, or the position or other properties of an object in the vicinity of a base station and a user equipment, based on direct path, and reflections of reference signals, such as PRS, TRS or CSI-RS. US 2021/076367 discloses a wireless sensing communication network.

### SUMMARY

An object of the present invention is to provide a technically simple, effective and cost-effective solution for conducting radiofrequency sensing allowing to efficiently derive information regarding transmission channel properties between different stations and/or regarding an object that reflects the radiofrequency sensing signal. A further object of the present invention is to provide a corresponding system or mobile communication network, radiofrequency sensing station and a corresponding program and computer-readable medium.

The object of the present invention is achieved by a method according to claim 1.

It is thereby advantageously possible according to the present invention that radiofrequency sensing is able to be performed in a comparatively easy and straight-forward manner, and that it is possible - by means of the radiofrequency sensing signal using transmission resources specifically assigned or associated to the first radiofrequency sensing station - for the second radiofrequency sensing station (or any station receiving the radiofrequency sensing reception signal) to know that it is the first radiofrequency sensing station from where the received signal is originating, i.e. only by means of receiving the respective signal (and, consequently, thereby being able to determine the transmission resources used for generating the respective signal), the identity of the transmitting radiofrequency sensing station (i.e. the first radiofrequency sensing station in the situation considered) is able to be determined by the second radiofrequency sensing station (or any other receiving station).

According to the present invention, a solution is provided for being able to efficiently conducting radiofrequency sensing.

Conventionally, radiofrequency sensing may refer to a radiofrequency sensing station transmitting a radiofrequency sensing signal, and wherein this radiofrequency sensing signal is reflected by an object - especially a movable object, e.g. a vehicle or a drone or the like -, and a corresponding radiofrequency sensing reception signal (i.e. corresponding to the radiofrequency sensing signal) being received by the same radiofrequency sensing station. In such a situation, it might be possible for the radiofrequency sensing station to infer the distance of the object from the time interval between the sensing signal and the sensing reception signal, or the movement of the object from an increasing and/or decreasing time interval between repeated sensing signals and corresponding sensing reception signal. Furthermore, with improved active antenna technology such as beamforming antennas, an angular resolution of the reflecting object can be achieved.

However, a faster and/or more complete and/or more precise characterization of the object, especially its localization, might be possible if the considered radiofrequency sensing reception signal would be a signal being received by another station (i.e. different from the station transmitting the radiofrequency sensing signal); especially, this would allow for, among other possibilities, conducting triangulation techniques to infer, e.g., the position of the moving object, and, in addition - by means of considering the direct path-transmitted radiofrequency sensing signal as the radiofrequency sensing reception signal -, properties of the transmission channel between both radiofrequency sensing stations.

Hence, according to the present invention, the possibility of radiofrequency sensing is addressed involving a first radiofrequency sensing station and at least a second radiofrequency sensing station (typically located at a certain geographical distance from the first radiofrequency sensing station, the distance ranging, e.g., from at least several meters or several tens or hundreds of meters to several kilometers or even several tens or kilometers). The first radiofrequency sensing station transmits a radiofrequency sensing signal, and, as a result of the radiofrequency sensing signal being transmitted, a radiofrequency sensing reception signal is received by the second radiofrequency sensing station. The radiofrequency sensing reception signal corresponds to or comprises the direct path-transmitted radiofrequency sensing signal and/or a reflection of the radiofrequency sensing signal, allowing to derive, based on the radiofrequency sensing reception signal, information regarding transmission channel properties between the first and second radiofrequency sensing station and/or regarding an object that reflects the radiofrequency sensing signal.
However, in order to be able to derive such pieces of information (regarding transmission channel properties and/or regarding an object reflecting the radiofrequency sensing signal) from the radiofrequency sensing reception signal received by the second radiofrequency sensing station necessarily requires knowledge about certain properties of the radiofrequency sensing signal, such as the transmission time, the location from where the signal has been transmitted and the like.

According to the present invention, the method comprises the step of transmitting the radiofrequency sensing signal, by the first radiofrequency sensing station, and receiving the corresponding radiofrequency sensing reception signal, by the second radiofrequency sensing station, wherein the radiofrequency sensing signal uses (radio) transmission resources specifically assigned or associated to the first radiofrequency sensing station (i.e. the station transmitting the radiofrequency sensing signal). In a subsequent (second) step, based on the radiofrequency sensing reception signal, at least one piece of information regarding the transmission channel properties between the first and second radiofrequency sensing station and/or regarding the object is derived.
According to the present invention, the terms "transmission resources" or "radio transmission resources" especially refer to the air interface the (first) radiofrequency sensing station uses to transmit radiofrequency signals. Typically, such transmission resources used by the mobile communication network are organized in a certain frequency domain structure as well as a certain time domain structure, i.e. for the radiofrequency sensing signal a certain frequency or frequency band or frequency carrier or sub-carrier is used and it is transmitted at a certain point in time or during a certain time interval. Such frequency domain structures as well as time domain structures may differ between different radio access technologies or different generations of mobile communication networks or technologies but are commonly used among radiofrequency sensing stations using the same radio access technology.

According to the present invention, it is advantageously possible to include sensing capabilities in communication networks. Preferably, the same components of the radio access network of (or associated with) a mobile communication network should be used to provide communication on the one hand while providing radiofrequency sensing technology on the other hand.

According to the present invention, it is advantageously possible and preferred that in case that the radiofrequency sensing signal, and, as a consequence, also the radiofrequency sensing reception signal, is structured such that it comprises, or carries, at least one out of the following:
-- an indication regarding or related to its time of transmission, especially a time stamp information of the transmission time,
-- an indication regarding or related to the identity of the first radiofrequency sensing station,
-- an indication regarding or related to a specific radiofrequency sensing signal or radiofrequency sensing reception signal out of a sequence of such signals transmitted by the first radiofrequency sensing station,
-- an indication regarding or related to the transmission angle, especially the rotation and elevation,
   -- an indication regarding or related to the transmission power used,
   -- an indication regarding or related to the signal form of the radiofrequency sensing signal, especially its modulation and/or the signal length,
   wherein especially the radiofrequency sensing signal and/or the radiofrequency sensing reception signal comprises or uses an interoperable signal structure.

It is thereby advantageously possible that by means of the radiofrequency sensing signal itself (or by means of the radiofrequency sensing reception signal itself) critical information or pieces of information are able to be provided towards the second radiofrequency sensing station in order to enable the second radiofrequency sensing station (or another network node or station such as a calculation instance) to derive, based on the radiofrequency sensing reception signal, the at least one piece of information regarding the transmission channel properties between the first and second radiofrequency sensing station and/or regarding the object.
The indication regarding or related to the identity of the first radiofrequency sensing station, might, e.g., correspond to an integer value physically transmitted as part of (a modulation of) the radiofrequency sensing (reception) signal, whereas a table or a database information or repository, being accessible by the second radiofrequency sensing station, comprises additional information, such as, e.g., the name, identity, location, etc. of the first radiofrequency sensing station. Especially, the indication regarding or related to the identity of the first radiofrequency sensing station might be globally unique; alternatively, this indication is preferably unique only within a typical coverage area of the first radiofrequency sensing station and/or within a location area and/or tracking area.
Analogously, the indication regarding or related to a specific radiofrequency sensing signal or radiofrequency sensing reception signal out of a sequence of such signals transmitted by the first radiofrequency sensing station, might, e.g., correspond to an integer value physically transmitted as part of (a modulation of) the radiofrequency sensing (reception) signal, whereas a table or a database information or repository, being accessible by the second radiofrequency sensing station, comprises additional information, such as, e.g., the transmission time, the transmission power, the transmission angle, especially the rotation and elevation, the signal form of the radiofrequency sensing (reception) signal, especially its modulation and/or the signal length, etc. of the corresponding radiofrequency sensing (reception) signal within the sequence of such signals.

According to the present invention, it is advantageously furthermore possible and preferred that, in the second step and based on the information content of the radiofrequency sensing reception signal, the at least one piece of information regarding the transmission channel properties between the first and second radiofrequency sensing station and/or regarding the object, especially the distance and/or the position and/or the location of the object, is determined,
wherein especially this determination is based on, besides the information content of the radiofrequency sensing reception signal, pieces of information available at the second radiofrequency sensing station, or accessible by the second radiofrequency sensing station.

It is thereby advantageously possible according to the present invention that no additional indications regarding the radiofrequency sensing (reception) signal need to be transmitted from the first radiofrequency sensing station to the second radiofrequency sensing station - or, in other words: the second radiofrequency sensing station (or another network node or calculation instance) is able to access or retrieve all necessary information elements in order to be able to derive the interesting pieces of information regarding the transmission channel properties between the first and second radiofrequency sensing station and/or regarding the object.

According to another embodiment of the present invention, it is furthermore advantageously possible and preferred that, in the second step, the at least one piece of information regarding the transmission channel properties between the first and second radiofrequency sensing station and/or regarding the object, especially the distance and/or the position and/or the location of the object, is determined based on the information content of the radiofrequency sensing reception signal in addition to at least one piece of information that is related to the radiofrequency sensing and radiofrequency sensing reception signals and received from the first radiofrequency sensing station.

It is thereby advantageously possible according to such an embodiment of the present invention that the first radiofrequency sensing station provides, to the second radiofrequency sensing station (or to another network node or calculation instance), additional indications (or information elements) regarding or in view of interpreting the radiofrequency sensing (reception) signal.

Furthermore, it is advantageously possible and preferred according to the present invention that the first radiofrequency sensing station is a base station entity (first base station entity) of a mobile communication network, especially a gNB-station as part of a radio access network of the mobile communication network, the first radiofrequency sensing station especially being able to serve at least one first user equipment,
wherein the radiofrequency sensing signal is or corresponds to a radiofrequency signal required for communication purposes between the first radiofrequency sensing station and the at least one first user equipment, wherein especially the radiofrequency signal required for communication purposes between the first radiofrequency sensing station and the at least one first user equipment corresponds to a broadcast signal, especially carrying a piece of system information.

By means of the first radiofrequency sensing station being a base station entity of the mobile communication network, the inventive method and system is able to be implemented in an especially efficient manner.

Furthermore, it is advantageously possible and preferred according to the present invention that the second radiofrequency sensing station is likewise a base station (second base station entity) entity of a mobile communication network, especially a gNB-station as part of a radio access network of the mobile communication network, the second radiofrequency sensing station especially being able to serve at least one second user equipment,
wherein the second radiofrequency sensing station is configured such as to, or comprises means to, receive the radiofrequency sensing reception signal, especially receive the radiofrequency sensing reception signal simultaneously to a radiofrequency signal related to communication purposes between the second user equipment and the second radiofrequency sensing station.

By means of the second radiofrequency sensing station being a base station entity of the mobile communication network, the inventive method and system is able to be implemented in an especially efficient manner.

According to a further preferred embodiment of the present invention, the at least one piece of information regarding the transmission channel properties between the first and second radiofrequency sensing station and/or regarding the object, especially the distance and/or the position and/or the location of the object, is provided to an entity or network node of the mobile communication network, especially a calculation instance or a repository instance,
wherein especially the second step is performed by the second radiofrequency sensing station or by an entity or network node of the mobile communication network, especially a calculation instance.

Thereby, it is advantageously possible to implement the inventive method and system in an especially efficient manner.

According to a further preferred embodiment of the present invention, the transmission resources, especially the time resources and/or the frequency resources, used for transmitting the radiofrequency sensing signal are assigned or associated to the first radiofrequency sensing station in a unique manner within a typical coverage area of the first radiofrequency sensing station and/or within a location area and/or tracking area,
wherein especially the identity of the first radiofrequency sensing station is able to be determined based on the transmission resources used for transmitting the radiofrequency sensing signal.

It is thereby advantageously possible to be able to repeat the use of a considered set of transmission resources among a plurality of different radiofrequency sensing station, provided that such radiofrequency sensing stations are geographically sufficiently spaced to avoid, or to at least limit as much as possible, not only signal interference between such radio frequency signals but also a mismatch (or a misassignment) of the identity of two radiofrequency sensing stations based on a radiofrequency sensing station (acting as a second radiofrequency sensing station, i.e. receiving a radiofrequency sensing reception signal) receiving such radiofrequency signals transmitted by those two radiofrequency sensing stations using the same transmission resources.
Being able to determine (i.e. the radiofrequency sensing station, acting as the second radiofrequency sensing station, being able to determine) the identity of the first radiofrequency sensing station based on, especially solely based on, the transmission resources used by that radiofrequency sensing station provides the possibility to use the radiofrequency sensing signal for radiofrequency sensing purposes but without the need for such a radiofrequency signal to carry any (modulated) information content used for radiofrequency sensing purposes; hence, the information content of the signal is able to be used for operative communication purposes.

Furthermore, it is advantageously possible and preferred according to the present invention that the maximum signal duration or maximum pulse duration of the radiofrequency sensing signal corresponds to 500 µs, preferably to 250 µs, more preferably to 125 µs, more preferably to 62,5 µs, and more preferably to 50 µs or to less than 50 µs,
and additionally wherein the minimum signal duration or minimum pulse duration of the radiofrequency sensing signal corresponds to 0,1 µs, preferably to 1 µs, more preferably to 2 µs.

Thereby, it is advantageously possible implement the inventive method and system in an especially efficient manner.

Furthermore, it is advantageously possible and preferred according to the present invention that the object is located in the vicinity of both the first and second radiofrequency sensing stations, especially within a distance from the center location of the first and second radiofrequency sensing stations within two times or three times or four times the distance between the first and second radiofrequency sensing stations.

Thereby, it is advantageously possible implement the inventive method and system in an especially efficient manner.

Furthermore, it is advantageously possible and preferred according to the present invention that the first radiofrequency sensing station acts as a second radiofrequency sensing station and either the second radiofrequency sensing station or a further radiofrequency sensing station acts as a first radiofrequency sensing station.

Thereby, it is advantageously possible that all or at least a plurality of radiofrequency sensing stations are able to be used both as a transmitting station (i.e. transmitting the (or its) radiofrequency sensing signal) and as a receiving station (i.e. receiving the radiofrequency sensing reception signal, corresponding to a radiofrequency sensing signal transmitted by another radiofrequency sensing station nearby or in the vicinity).

Furthermore, the present invention relates to a system or mobile communication network according to claim 12.

Furthermore, the present invention relates to a radiofrequency sensing station according to claim 13.

Additionally, the present invention relates to a program according to claim 14.

Still additionally, the present invention relates to a computer-readable medium according to claim 15.

Features and advantages of the present invention will become apparent from the following detailed description, taken in conjunction with the accompanying drawings, which illustrate, by way of example, the principles of the invention. The description is given for the sake of example only, without limiting the scope of the invention, which is defined by the appended claims. The reference figures quoted below refer to the attached drawings.

### BRIEF DESCRIPTION OF THE DRAWINGS

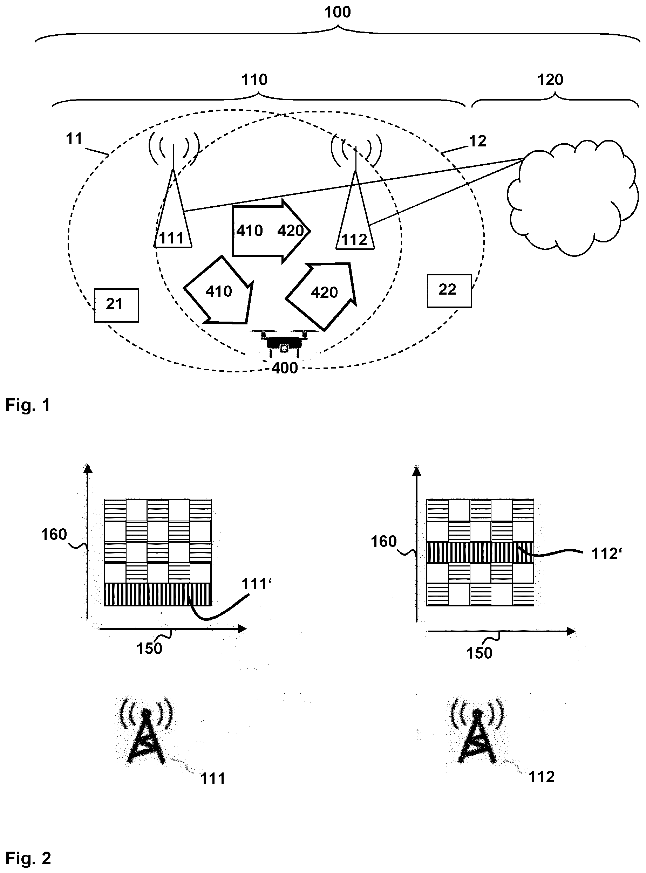

Figure 1 schematically illustrates a mobile communication network comprising or interworking with a first radiofrequency sensing station as well as a second radiofrequency sensing station for conducting radiofrequency sensing, the first radiofrequency sensing station transmitting a radiofrequency sensing signal and the second radiofrequency sensing station receiving a radiofrequency sensing reception signal that is received as a result of the radiofrequency sensing signal being transmitted.
Figure 2 schematically illustrates the first and a second radiofrequency sensing stations together with a representation of transmission resources being specifically assigned or associated to the first or the second radiofrequency sensing station, respectively.

### DETAILED DESCRIPTION

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order.

In Figure 1, schematically illustrates a mobile communication network 100 comprising or interworking with a first radiofrequency sensing station 111 as well as a second radiofrequency sensing station 112 for conducting radiofrequency sensing, the first radiofrequency sensing station 111 transmitting a radiofrequency sensing signal 410 and the second radiofrequency sensing station 112 receiving a radiofrequency sensing reception signal 420 that is received as a result of the radiofrequency sensing signal 410 being transmitted. The radiofrequency sensing signal 410 is schematically illustrated by means of an arrow, or arrows, emanating from the first radiofrequency sensing station 111, and the radiofrequency sensing reception signal 420 is schematically illustrated by means of an arrow, or arrows, arriving at the second radiofrequency sensing station 112.
While it is possible that the first radiofrequency sensing station 111 transmits the radiofrequency sensing signal 410 in a direction-dependent manner (e.g. by using active antenna technology, e.g. beamforming antennas, such as to achieve an angular resolution or variation of the transmission power with regard to the radiofrequency sensing signal **410),** Figure 1 primarily shows, as one exemplary implementation, the rather classical transmission of the radiofrequency sensing signal **410** in various directions.
More specifically, Figure 1 is intended to show, as one possibility, a direct transmission (or direct path-transmission) of the radiofrequency sensing signal **410** from the first radiofrequency sensing station 111 towards or in the direction of the second radiofrequency sensing station 112, and, as another possibility, a transmission of the radiofrequency sensing signal **410** towards or in the direction of an object 400 in the vicinity of the first and second radiofrequency sensing stations 111, 112, especially a moving object 400 such as a vehicle, a drone or the like. Both possibilities (of the radiofrequency sensing signal being transmitted to the second radiofrequency sensing station 112) might also (and will in many circumstances) be realized cumulatively, i.e. the radiofrequency sensing signal **410** is transmitted, and, as a consequence or result thereof, the radiofrequency sensing reception signal 420 received by the second radiofrequency sensing station 112 comprises a (signal) component corresponding to the direct path-transmission as well as a (signal) component corresponding to the reflection, by the object 400, of the radiofrequency sensing signal **410** in the direction of the second radiofrequency sensing station 112.
Of course, besides considering the direct path-transmission and considering one reflection at the object 400, there is also the possibility of at least one additional reflection (or even a plurality of further or additional reflections) occurring prior to the radiofrequency sensing reception signal 420 being received by the second radiofrequency sensing station 112, leading to further (signal) components of the radiofrequency sensing reception signal 420 - however, for the sake of simplicity, this is not explicitly shown in Figure 1.
Hence, the radiofrequency sensing reception signal 420 is received, by the second radiofrequency sensing station 112, as a result of the radiofrequency sensing signal **410** being transmitted by the first radiofrequency sensing station 111, and from the knowledge of both the radiofrequency sensing signal **410** and the radiofrequency sensing reception signal 420, it is possible to derive an information (or various pieces of information), especially regarding transmission channel properties between the first and second radiofrequency sensing station 111, 112 and/or regarding the object 400 that reflects the radiofrequency sensing signal 410.
In the context of the present invention, the terms radiofrequency sensing signal 410 and radiofrequency sensing reception signal 420 are used in order to indicate that a (radiofrequency) signal (i.e. the radiofrequency sensing signal 410), once transmitted by the first radiofrequency sensing station 111, is necessarily altered (such as distorted, attenuated, reflected or the like), and, hence, arrives (or is received) as an at least somehow or somewhat different (radiofrequency) signal (i.e. the radiofrequency sensing reception signal 420) at the reception side, i.e. the second radiofrequency sensing station 112. However, the radiofrequency sensing reception signal 420 is not inherently different from the radiofrequency sensing signal 410, but carries the signal modifications having occurred while being propagated between the first and second radiofrequency sensing stations 111, 112. Furthermore, in the context of the present invention, the two radiofrequency sensing stations 111, 112 are mainly described such that the first radiofrequency sensing station 111 transmits the radiofrequency sensing signal 410 and the second radiofrequency sensing station 112 receives the radiofrequency sensing reception signal 420. However, according to the present invention, the two radiofrequency sensing stations 111, 112 might preferably also be used vice versa, i.e. such that the first radiofrequency sensing station 111 acts as the station receiving a radiofrequency sensing reception signal, i.e. it acts as a second radiofrequency sensing station, and, e.g., the second radiofrequency sensing station 112 (or a still further radiofrequency sensing station, not represented in Figure 1) acts as the station transmitting a radiofrequency sensing signal, i.e. it (the second radiofrequency sensing station) acts as a first radiofrequency sensing station. Thus, all (or at least a plurality of) radiofrequency sensing stations are able to be used both as a transmitting station (i.e. transmitting the (or its) radiofrequency sensing signal) and as a receiving station (i.e. receiving the radiofrequency sensing reception signal, the radiofrequency sensing reception signal corresponding to a radiofrequency sensing signal transmitted by another radiofrequency sensing station nearby or in the vicinity).

In the example shown in Figure 1, the mobile communication network 100 comprises an access network 110 and a core network 120. The mobile communication network 100 is preferably a cellular telecommunications network comprising typically a plurality of network cells (or radio cells), generated or served by a corresponding base station entity, and each network cell or radio cell (or its corresponding base station entity) having a radio coverage area. Typically, the base station entities of a mobile communication network 100 correspond to terrestrial base station entities, i.e. stationary and non-movable stations having, respectively, a generally fixed position or location. However, according to the present invention, it is not excluded that one or a plurality of base station entities of the mobile communication network 100 are provided as air-based or space-based base station entities, i.e. non-terrestrial base station entities, being movable or having a changing or time-dependent position or location.

According to the present invention, it is preferred (but not mandatorily the case) that the first radiofrequency sensing station 111 is or corresponds to a base station entity of the mobile communication network 100, especially a gNB-station, as part of the radio access network 110 of the mobile communication network 100, having a radio coverage area (or (first) radio cell) indicated by means of reference sign 11 and a dashed line in Figure 1. In this case (that the first radiofrequency sensing station 111 is or corresponds to a base station entity of the mobile communication network 100), the first radiofrequency sensing station 111 is preferably able to serve at least one first user equipment 21 being located within its radio cell 11 (or first radio cell 11), and the first radiofrequency sensing station 111 is also called first base station entity 111 - i.e. these terms are used synonymously. Typically, the first base station entity 111 is able to serve more than one (first) user equipment located in the first radio cell 11.
Likewise preferaby, the second radiofrequency sensing station 112 is or corresponds to a base station entity of the mobile communication network 100, especially a gNB-station, likewise as part of the radio access network 110 of the mobile communication network 100, having a radio coverage area (or (second) radio cell) indicated by means of reference sign 12 and a further dashed line in Figure 1. In this case (that the second radiofrequency sensing station 112 is or corresponds to a base station entity of the mobile communication network 100), the second radiofrequency sensing station 112 is preferably able to serve at least one second user equipment 22 being located within its radio cell 12 (or second radio cell 12), and the second radiofrequency sensing station 112 is also called second base station entity 112 - i.e. these terms are used synonymously. Typically, the second base station entity 112 is able to serve more than one (second) user equipment located in the second radio cell 12.

According to the present invention, the method for conducting radiofrequency sensing (involving the first radiofrequency sensing station 111 - or first base station entity 111 - and the at least second radiofrequency sensing station 112 - or second base station entity 112), comprises the steps of:
-- in the first step, the radiofrequency sensing signal 410 is transmitted by the first radiofrequency sensing station 111 using transmission resources specifically assigned or associated to the first radiofrequency sensing station 111,
-- in the second step, based on the radiofrequency sensing reception signal 420 (corresponding to the radiofrequency sensing signal 410) being (or having been) received by the second radiofrequency sensing station 112, at least one piece of information regarding the transmission channel properties between the first and second radiofrequency sensing station 111, 112 and/or regarding the object 400 is derived or is able to be derived. As an example of an information or a piece of information regarding the object 400, e.g. the position or location of the object 400 and/or its velocity might be derived based on the radiofrequency sensing reception signal 420, especially based on analyzing a (signal) portion or part thereof arriving slightly delayed compared to the direct path-transmitted signal. As an example of an information or a piece of information regarding the transmission channel properties between the first and second radiofrequency sensing station 111, 112, e.g. the current signal attenuation or multi-path propagation characteristics might be derived based on the radiofrequency sensing reception signal 420.

In Figure 2, the first and a second radiofrequency sensing stations 111, 112, together with a representation of transmission resources being specifically assigned or associated to the first or the second radiofrequency sensing station 111, 112, respectively, are schematically represented.
These (radio) transmission resources refer to the air interface that the first radiofrequency sensing station 111 (or first base station entity 111) or the second radiofrequency sensing station 112 (or second base station entity 112) uses to transmit radiofrequency signals. Typically, such transmission resources used by the mobile communication network 100 are organized in a certain frequency domain structure as well as a certain time domain structure, i.e. for the radiofrequency sensing signal 410, a certain frequency or frequency band or frequency carrier or sub-carrier is used and it is transmitted at a certain point in time or during a certain time interval. Such frequency domain structures as well as time domain structures may differ between different radio access technologies or different generations of mobile communication networks or technologies but are commonly used among radiofrequency sensing stations 111, 112 (or base station entities 111, 112) using the same radio access technology. In Figure 2, a time domain structure 150 as well as a frequency domain structure 160 is schematically shown for both the first radiofrequency sensing station 111 and the second radiofrequency sensing station 112. The schematical diagram-like representations of time-frequency resources are intended to represent the identical (part of the) available transmission resources of the air interface used by these radiofrequency sensing stations and/or base station entities 111, 112.
Typically, (radio) transmission resources might be organized in resource blocks or physical resource blocks, wherein one of the horizontally hatched blocks (or one of the blank blocks) represented in Figure 2 is exemplarily intended to represent such a resource block or physical resource block or part thereof. Likewise, the vertically hatched portions or parts of the (radio) transmission resources - represented on the left hand side for the first radiofrequency sensing station (or first base station entity) 111 and on the right hand side for the second radiofrequency sensing station (or second base station entity) 112 - also correspond to some (radio) transmission resources in the sense of one or a plurality of resource blocks or physical resource blocks or a part of a resource block or a part of a physical resource block. As can be seen even from the schematical representation in Figure 2, the (radio) transmission resources 111' specifically assigned or associated to the first radiofrequency sensing station 111 (or first base station entity 111) - hereinafter also referred to as first (radio) transmission resources 111' - are located (or comprise) a different frequency (or frequency interval or frequency band or carrier or sub-carrier) in the frequency domain 160 compared to the (radio) transmission resources 112' specifically assigned or associated to the second radiofrequency sensing station 112 (or second base station entity 112) - hereinafter also referred to as second (radio) transmission resources 112'. Regarding the time-domain 150, both the first and second (radio) transmission resources 111', 112' are schematically shown as occupying the same time slots. As an alternative to the representation shown in Figure 2, the first and second (radio) transmission resources 111', 112' could also be occupying different time slots in the time domain 150 (but the same frequency (or frequency interval or frequency band or carrier or sub-carrier) in the frequency domain 160). Furthermore alternatively (and likewise not represented in Figure 2), the first and second (radio) transmission resources 111', 112' could also be organized to occupy different time slots in the time domain 150 as well as different frequencies (or frequency intervals or frequency bands or carriers or sub-carriers) in the frequency domain 160.

As already mentioned, in order to leverage the potential of radiofrequency sensing, especially in deriving pieces of information (regarding transmission channel properties and/or regarding objects, especially moving objects) reflecting the radiofrequency sensing signal) from the radiofrequency sensing reception signal received by the second radiofrequency sensing station, not only the radiofrequency sensing reception signal is to be analyzed but also certain properties of the radiofrequency sensing signal are to be known (by the entity deriving such pieces of information, such as the second radiofrequency sensing station 112 or another network node of the mobile communication network 100). According to the present invention, as the radiofrequency sensing signal 410 uses transmission resources 111' specifically assigned or associated to the first radiofrequency sensing station (111), even without the radiofrequency sensing signal 410 explicitly carrying (e.g. in the sense of a modulated signal) an information identifying the first radiofrequency sensing station 111, upon reception of the corresponding radiofrequency sensing reception signal 420, it is possible (for the analyzing entity) to know the originator thereof (i.e. the first radiofrequency sensing station 111 having transmitted the corresponding radiofrequency sensing signal 410).
It is especially preferred according to the present invention, that the transmission resources 111' (especially the time resources and/or the frequency resources) used for transmitting the radiofrequency sensing signal 410 are assigned or associated to the first radiofrequency sensing station 111 in a unique manner within a typical coverage area of the first radiofrequency sensing station (111) and/or within a location area and/or tracking area. Hence, within a part of the mobile communication network 100 (especially a geographical region such as a location area or a tracking area) the unique assignment of the transmission resources 111' to the first radiofrequency sensing station 111 allows the second radiofrequency sensing station 112 (receiving the radiofrequency sensing reception signal 420 corresponding to the radiofrequency sensing signal 410) to know the identity of the first radiofrequency sensing station 111. In case that also the transmission timing (within the allotted time slot (or time slots) of the transmission resources 111') is available (due to the first radiofrequency sensing station 111 conforming to a predefined transmission pattern) to the second radiofrequency sensing station 112 (e.g. via a database comprising the predefined transmission pattern or characteristics thereof), the second radiofrequency sensing station 112 (or another entity or instance, such as a calculation instance) is able to derive the respective pieces of information (regarding transmission channel properties and/or regarding objects (especially moving objects) reflecting the radiofrequency sensing signal).

In case that the first radiofrequency sensing station 111 is a base station entity of the mobile communication network 100 (and, hence, the first radiofrequency sensing station 111 typically being able to serve the at least one first user equipment 21, located within the first radio cell 11), it is advantageously possible and preferred according to the present invention that the radiofrequency sensing signal 410 is or corresponds to a radiofrequency signal required for communication purposes between the first radiofrequency sensing station 111 (i.e. the first base station entity 111) and the at least one first user equipment 21. This means that the transmission resources 111' used for sensing purpose do not necessarily need to be 'wasted' (in the sense of not being able to be operatively used, i.e. for communication purposes) but are able to be received both by the at least one first user equipment 21 - for (operative) communication purposes - and by the second radiofrequency sensing station 112 - for sensing purposes. Especially, such an operatively used radiofrequency signal (i.e. required for communication purposes between the first radiofrequency sensing station 111 and the at least one first user equipment 21) corresponds to a broadcast signal, especially carrying a piece of system information (of the first radiofrequency sensing station 111 or first base station entity 111). Typically, in order to receive such an operatively used radio frequency signal (from the first base station entity 111), the neighboring second base station entity 112 needs to be modified somehow (especially regarding its reception capabilities), as normally transmission resources are distributed (or assigned) in a manner such that the need (or even the risk) of neighboring (or nearby) base station entities effectively receiving broadcast signals from each other is typically avoided.
Hence, in case that the second radiofrequency sensing station 112 is a base station entity of the mobile communication network 100 (and, hence, the second radiofrequency sensing station 112 typically being able to serve at least one second user equipment 22, located within the second radio cell 12), it is advantageously possible and preferred according to the present invention that the second radiofrequency sensing station 112 is configured such as (or comprises means) to receive the radiofrequency sensing reception signal 420, especially receive the radiofrequency sensing reception signal 420 simultaneously to a radiofrequency signal related to communication purposes between the second user equipment 22 and the second radiofrequency sensing station 112.
One especially advantageous possibility according to the present invention is the reuse for radiofrequency sensing purposes of (operative) radiofrequency signals (used for communication purposes), especially between the first radiofrequency sensing station 111 and the at least one first user equipment 21, in case that beam sweeping is used to transmit such radiofrequency signals to the at least one first user equipment 21.

In case that the radiofrequency sensing signal 410 is transmitted for communication purposes as well, there are no or almost no transmission resources specifically 'wasted' for radiofrequency sensing. In case that the radiofrequency sensing signal 410 is not used for communication purposes or not only used for communication purposes, the signal is able to be modified or specifically configured in view of sensing purposes, e.g. with respect to its signal duration and/or with respect to the information content it carries. Regarding signal duration of the radiofrequency sensing signal 410, it is especially preferred that the maximum signal duration or maximum pulse duration of the radiofrequency sensing signal 410 corresponds to 500 µs, preferably to 250 µs, more preferably to 125 µs, more preferably to 62,5 µs, and more preferably to 50 µs or to less than 50 µs, and additionally that the minimum signal duration or minimum pulse duration of the radiofrequency sensing signal 410 corresponds to 0,1 µs, preferably to 1 µs, more preferably to 2 µs. Typically, the shorter the signal duration of the radiofrequency sensing signal 410, the better is the special resolution potential when analyzing the radiofrequency sensing reception signal 420; however, a longer signal duration provides the possibility for the radiofrequency sensing signal 410 to carry more pieces of information. Typically, within or regarding the new radio (NR) standard, the normal transmission time is 0.5 milliseconds which corresponds to 500 µs pulse duration; however, certain radio configurations use a symbol length down to 62.5 µs and even less if mini-slot configuration is involved, and typically with further technology development this pulse duration will be further minimized, so that better resolution for sensing will become applicable. Regarding to the information content of the radiofrequency sensing signal 410, the radiofrequency sensing signal 410, and, as a consequence, also the radiofrequency sensing reception signal 420, is structured such that it comprises, or carries, an indication regarding or related to the location of the first radiofrequency sensing station 111, especially its coordinates and/or height. The radiofrequency sensing signal may further comprise at least one of the following:
-- an indication regarding or related to its time of transmission, especially a time stamp information of the transmission time,
-- an indication regarding or related to the identity of the first radiofrequency sensing station 111,
-- an indication regarding or related to a specific radiofrequency sensing signal 410 or radiofrequency sensing reception signal 420 out of a sequence of such signals transmitted by the first radiofrequency sensing station 111,
-- an indication regarding or related to the transmission angle, especially the rotation and elevation,
   -- an indication regarding or related to the transmission power used,
   -- an indication regarding or related to the signal form of the radiofrequency sensing signal 410, especially its modulation and/or the signal length,
   wherein especially the radiofrequency sensing signal 410 and/or the radiofrequency sensing reception signal 420 comprises or uses an interoperable signal structure, especially a signal structure that is applicable to be used between mobile communication network equipment of different vendors.

Generally according to the present invention, it is proposed to make the radiofrequency sensing system universal and interoperable by introducing at least a known or defined signal structure to either carry information about the transmission or to implicitly transport information about the transmission. In this respect, it is possible and preferred according to the present invention, to use a "mini-slot"-type of transmission. Especially, it is proposed to define the radiofrequency sensing signal 410 by re-using the physical layer structure of new radio (NR) or its evolution containing information about transmission location (long/latitude/height) and at least one out of:
-- definition of signal form (modulation, signal length, etc.),
-- transmission power (Tx power),
-- time of transmission (timestamp at Tx with ns accuracy),
-- transmission angle (rotation and elevation in degree),
-- transmission station identity.
With this information as part of the backscattered signal (i.e. the radiofrequency sensing reception signal 420, or, in other words, the signal which is reflected by the object 400), the second radiofrequency sensing station 112 is able to receive the signal and calculate the distance and the position of the scatterer (i.e. the object 400) from its reception point (i.e. the location of the second radiofrequency sensing station 112). With this information alone, the second radiofrequency sensing station 112 is in the position to do the full calculation as if the radiofrequency sensing signal 410 was sent from itself.

According to a preferred variant or embodiment of the present invention, the system is applied or implemented by combining the multiple transmissions and the knowledge of the transmission characteristics and the receptions and by doing this joint detection of scattering signals (or reflection signals), the accuracy of the position estimate for the scattering or reflecting object 400 is able to be improved. An exchange of the received information between the different nodes (i.e. between the first and second radiofrequency sensing station 111, 112) or the information forwarding to a central calculation Instance is needed for this. The data format of the received information are preferably defined in a standardized manner.

Depending on the deployment situation it might be needed to exclude some receiver to avoid direct path from Tx to Rx, e.g. all receivers which reside in the direction of the transmission might be filtered out.

In order to enable interference-free or minimized transmission of the sensing signals (i.e. the radiofrequency sensing signal and the radiofrequency sensing reception signal), a coordination of the time and/or frequency resources to be used for the sensing signal transmission is typically required. In case of TDD (time division duplex) transmission being implemented in the mobile communication network 100 (as it is the case, e.g., in today's new radio networks (NR, i.e. 5G systems) that requires a tightly time synchronized manner of operation (due to their TDD transmission), this can be used as time basis. An entity in the mobile communication network 100 can be used as a coordination entity in the NG-RAN. This is, e.g., a gNB which acts as a coordinating-gNB (or master-gNB), or, alternatively, negotiated between different gNBs or in an open O-RAN-based architecture deployment the RIC (Radio Intelligent Controller). According to the present invention, preferably at least time resource coordination or frequency resource coordination for sensing signals is applied; in an enhanced embodiment, both time and frequency coordination is applied.

E.g., a pseudo RRC signaling in ASN.1 might be as follows:

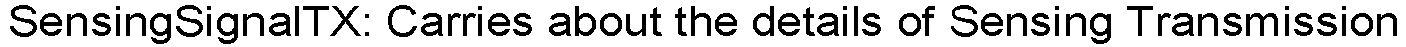

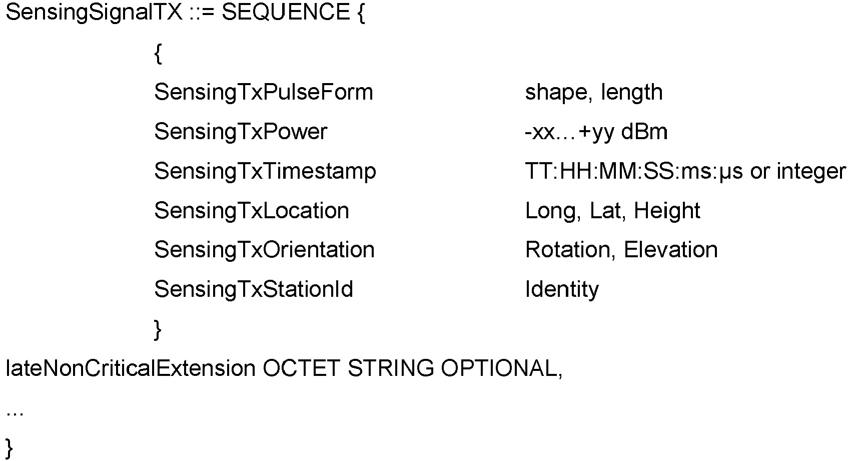

## Claims

1. Method for conducting radiofrequency sensing involving a first radiofrequency sensing station (111) and at least a second radiofrequency sensing station (112), wherein the first radiofrequency sensing station (111) transmits a radiofrequency sensing signal (410), wherein, as a result of the radiofrequency sensing signal (410) being transmitted, a radiofrequency sensing reception signal (420) is received by the second radiofrequency sensing station (112), the radiofrequency sensing reception signal (420) corresponding to or comprising
-- the direct path-transmitted radiofrequency sensing signal (410), allowing to derive, based on the radiofrequency sensing reception signal (420), information regarding transmission channel properties between the first and second radiofrequency sensing station (111, 112), or
-- a reflection of the radiofrequency sensing signal (410), allowing to derive, based on the radiofrequency sensing reception signal (420), information regarding an object (400) that reflects the radiofrequency sensing signal (410),
wherein, in order to conduct the radiofrequency sensing, the method comprises the following steps:
-- in a first step, the radiofrequency sensing signal (410) is transmitted by the first radiofrequency sensing station (111) and the corresponding radiofrequency sensing reception signal (420) is received by the second radiofrequency sensing station (112), wherein the radiofrequency sensing signal (410) uses transmission resources (111') specifically assigned or associated to the first radiofrequency sensing station (111),
-- in a second step, based on the radiofrequency sensing reception signal (420) and on an information content carried by the radiofrequency sensing reception signal (420), at least one piece of information is derived, wherein
-- the at least one piece of information is the information regarding the transmission channel properties between the first and second radiofrequency sensing station (111, 112), if the radiofrequency sensing reception signal (420) corresponds to or comprises the direct path-transmitted radiofrequency sensing signal (410), or
-- the at least one piece of information is the information regarding the object (400), if the radiofrequency sensing reception signal (420) corresponds to or comprises the reflection of the radiofrequency sensing signal (410), **characterized in that** the radiofrequency sensing signal (410), and, as a consequence, also the radiofrequency sensing reception signal (420), is structured such that it carries the information content corresponding to an indication regarding or related to the location of the first radiofrequency sensing station (111), especially its coordinates and/or height.

2. Method according to claim 1, wherein the radiofrequency sensing signal (410) and/or the radiofrequency sensing reception signal (420) comprises or uses an interoperable signal structure.

3. Method according to one of the preceding claims, wherein, in the second step, the at least one piece of information regarding the transmission channel properties between the first and second radiofrequency sensing station (111, 112) or regarding the object (400), especially the distance and/or the position and/or the location of the object (400), is determined based on, besides the information content of the radiofrequency sensing reception signal (420), pieces of information available at the second radiofrequency sensing station (112), or accessible by the second radiofrequency sensing station (112).

4. Method according to one of the preceding claims, wherein, in the second step, the at least one piece of information regarding the transmission channel properties between the first and second radiofrequency sensing station (111, 112) or regarding the object (400), especially the distance and/or the position and/or the location of the object (400), is determined based on the information content of the radiofrequency sensing reception signal (420) in addition to at least one piece of information that is related to the radiofrequency sensing and radiofrequency sensing reception signals (410, 420) and received from the first radiofrequency sensing station (111).

5. Method according to one of the preceding claims, wherein the first radiofrequency sensing station (111) is a base station entity of a mobile communication network (100), especially a gNB-station as part of a radio access network of the mobile communication network (100), the first radiofrequency sensing station (111) especially being able to serve at least one first user equipment (21),
wherein the radiofrequency sensing signal (410) is or corresponds to a radiofrequency signal required for communication purposes between the first radiofrequency sensing station (111) and the at least one first user equipment (21), wherein especially the radiofrequency signal required for communication purposes between the first radiofrequency sensing station (111) and the at least one first user equipment (21) corresponds to a broadcast signal, especially carrying a piece of system information.

6. Method according to one of the preceding claims, wherein the second radiofrequency sensing station (112) is likewise a base station entity of a mobile communication network (100), especially a gNB-station as part of a radio access network of the mobile communication network (100), the second radiofrequency sensing station (112) especially being able to serve at least one second user equipment (22),
wherein the second radiofrequency sensing station (112) is configured such as to, or comprises means to, receive the radiofrequency sensing reception signal (420), especially receive the radiofrequency sensing reception signal (420) simultaneously to a radiofrequency signal related to communication purposes between the second user equipment (22) and the second radiofrequency sensing station (112).

7. Method according to one of the preceding claims, wherein the at least one piece of information regarding the transmission channel properties between the first and second radiofrequency sensing station (111, 112) or regarding the object (400), especially the distance and/or the position and/or the location of the object (400), is provided to an entity or network node of the mobile communication network (100), especially a calculation instance or a repository instance,
wherein especially the second step is performed by the second radiofrequency sensing station (112) or by an entity or network node of the mobile communication network (100), especially a calculation instance.

8. Method according to one of the preceding claims, wherein the transmission resources (111'), especially the time resources and/or the frequency resources, used for transmitting the radiofrequency sensing signal (410) are assigned or associated to the first radiofrequency sensing station (111) in a unique manner within a typical coverage area of the first radiofrequency sensing station (111) and/or within a location area and/or tracking area, wherein especially the identity of the first radiofrequency sensing station (111) is able to be determined based on the transmission resources (111') used for transmitting the radiofrequency sensing signal (410).

9. Method according to one of the preceding claims, wherein the maximum signal duration or maximum pulse duration of the radiofrequency sensing signal (410) corresponds to 500 µs, preferably to 250 µs, more preferably to 125 µs, more preferably to 62,5 µs, and more preferably to 50 µs or to less than 50 µs, and additionally wherein the minimum signal duration or minimum pulse duration of the radiofrequency sensing signal (410) corresponds to 0,1 µs, preferably to 1 µs, more preferably to 2 µs.

10. Method according to one of the preceding claims, wherein the object (400) is located in the vicinity of both the first and second radiofrequency sensing stations (111, 112), especially within a distance from the center location of the first and second radiofrequency sensing stations (111, 112) within two times or three times or four times the distance between the first and second radiofrequency sensing stations (111, 112).

11. Method according to one of the preceding claims, wherein the first radiofrequency sensing station (111) acts as a second radiofrequency sensing station (112) and either the second radiofrequency sensing station (112) or a further radiofrequency sensing station acts as a first radiofrequency sensing station (111).

12. System or mobile communication network (100) for conducting radiofrequency sensing involving a first radiofrequency sensing station (111) and at least a second radiofrequency sensing station (112) as part of the system or mobile communication network (100), wherein the first radiofrequency sensing station (111) transmits a radiofrequency sensing signal (410), wherein, as a result of the radiofrequency sensing signal (410) being transmitted, a radiofrequency sensing reception signal (420) is received by the second radiofrequency sensing station (112), the radiofrequency sensing reception signal (420) corresponding to or comprising
-- the direct path-transmitted radiofrequency sensing signal (410), allowing to derive, based on the radiofrequency sensing reception signal (420), information regarding transmission channel properties between the first and second radiofrequency sensing station (111, 112), or
-- a reflection of the radiofrequency sensing signal (410), allowing to derive, based on the radiofrequency sensing reception signal (420), information regarding an object (400) that reflects the radiofrequency sensing signal (410),
wherein, in order to conduct the radiofrequency sensing, the system or mobile communication network (100) is configured such that:
-- the radiofrequency sensing signal (410) is transmitted by the first radiofrequency sensing station (111) and the corresponding radiofrequency sensing reception signal (420) is received by the second radiofrequency sensing station (112), wherein the radiofrequency sensing signal (410) uses transmission resources (111') specifically assigned or associated to the first radiofrequency sensing station (111),
-- based on the radiofrequency sensing reception signal (420) and on an information content carried by the radiofrequency sensing reception signal (420), at least one piece of information is derived,
wherein
-- the at least one piece of information is the information regarding the transmission channel properties between the first and second radiofrequency sensing station (111, 112), if the radiofrequency sensing reception signal (420) corresponds to or comprises the direct path-transmitted radiofrequency sensing signal (410), or
-- the at least one piece of information is the information regarding the object (400), if the radiofrequency sensing reception signal (420) corresponds to or comprises the reflection of the radiofrequency sensing signal (410), **characterized in that** the radiofrequency sensing signal (410), and, as a consequence, also the radiofrequency sensing reception signal (420), is structured such that it carries the information content corresponding to an indication regarding or related to the location of the first radiofrequency sensing station (111), especially its coordinates and/or height.

13. Radiofrequency sensing station (111, 112) configured to be used as a first radiofrequency sensing station (111) and/or as a second radiofrequency sensing station (112) for a system or for a mobile communication network according to claim 12.

14. Program comprising a computer readable program code, which, when executed in part on a first radiofrequency sensing station (111) and in part on a second radiofrequency sensing station (112), causes the first and second radiofrequency sensing station (111, 112) to perform the steps corresponding to either the first or the second radiofrequency sensing stations of the method according one of claims 1 to 11.

15. Computer-readable medium comprising instructions which when executed on a first radiofrequency sensing station (111) or on a second radiofrequency sensing station (112) for a mobile communication network (100) causes the first or second radiofrequency sensing station (111, 112) to perform the method steps corresponding to either the first or the second radiofrequency sensing stations according to one of claims 1 to 11.

## Patentansprüche

1. Verfahren zur Durchführung einer Hochfrequenz-Erfassung mit einer ersten Hochfrequenz-Erfassungsstation (111) und mindestens einer zweiten Hochfrequenz-Erfassungsstation (112), wobei die erste Hochfrequenz-Erfassungsstation (111) ein Hochfrequenz-Erfassungssignal (410) überträgt, wobei infolge der Übertragung des Hochfrequenz-Erfassungssignals (410) ein Hochfrequenz-Erfassungsempfangssignal (420) von der zweiten Hochfrequenz-Erfassungsstation (112) empfangen wird, wobei das Hochfrequenz-Erfassungsempfangssignal (420) entspricht oder umfasst
- das direktpfadübertragene Hochfrequenz-Erfassungssignal (410), das es ermöglicht, auf der Grundlage des Hochfrequenz-Erfassungsempfangssignals (420) Informationen über Übertragungskanaleigenschaften zwischen der ersten und zweiten Hochfrequenz-Erfassungsstation (111, 112) abzuleiten, oder
- eine Reflexion des Hochfrequenz-Erfassungssignals (410), die es ermöglicht, auf der Grundlage des Hochfrequenz-Erfassungsempfangssignals (420) Informationen über ein Objekt (400) abzuleiten, das das Hochfrequenz-Erfassungssignal (410) reflektiert,
wobei das Verfahren zur Durchführung der Hochfrequenz-Erfassung die folgenden Schritte umfasst:
- in einem ersten Schritt wird das Hochfrequenz-Erfassungssignal (410) von der ersten Hochfrequenz-Erfassungsstation (111) übertragen und das entsprechende Hochfrequenz-Erfassungsempfangssignal (420) wird von der zweiten Hochfrequenz-Erfassungsstation (112) empfangen, wobei das Hochfrequenz-Erfassungssignal (410) Übertragungsressourcen (111') verwendet, die spezifisch der ersten Hochfrequenz-Erfassungsstation (111) zugewiesen oder zugeordnet sind,
- in einem zweiten Schritt wird auf der Grundlage des Hochfrequenz-Erfassungsempfangssignals (420) und eines Informationsgehalts, der vom Hochfrequenz-Erfassungsempfangssignal (420) getragen wird, mindestens eine Information abgeleitet, wobei
- die mindestens eine Information die Information über die Übertragungskanaleigenschaften zwischen der ersten und zweiten Hochfrequenz-Erfassungsstation (111, 112) ist, wenn das Hochfrequenz-Erfassungsempfangssignal (420) dem direktpfadübertragenen Hochfrequenz-Erfassungssignal (410) entspricht oder dieses umfasst, oder
- die mindestens eine Information die Information über das Objekt (400) ist, wenn das Hochfrequenz-Erfassungsempfangssignal (420) der Reflexion des Hochfrequenz-Erfassungssignals (410) entspricht oder diese umfasst,
**dadurch gekennzeichnet, dass** das Hochfrequenz-Erfassungssignal (410) und folglich auch das Hochfrequenz-Erfassungsempfangssignal (420) so strukturiert ist, dass es den Informationsgehalt trägt, der einer Angabe über oder bezüglich des Standorts der ersten Hochfrequenz-Erfassungsstation (111), insbesondere ihrer Koordinaten und/oder Höhe, entspricht.

2. Verfahren nach Anspruch 1, wobei das Hochfrequenz-Erfassungssignal (410) und/oder das Hochfrequenz-Erfassungsempfangssignal (420) eine interoperable Signalstruktur umfasst oder verwendet.

3. Verfahren nach einem der vorhergehenden Ansprüche, wobei im zweiten Schritt die mindestens eine Information über die Übertragungskanaleigenschaften zwischen der ersten und zweiten Hochfrequenz-Erfassungsstation (111, 112) oder über das Objekt (400), insbesondere die Entfernung und/oder die Position und/oder der Standort des Objekts (400), auf der Grundlage von, neben dem Informationsgehalt des Hochfrequenz-Erfassungsempfangssignals (420), Informationen bestimmt wird, die an der zweiten Hochfrequenz-Erfassungsstation (112) verfügbar sind oder von der zweiten Hochfrequenz-Erfassungsstation (112) zugänglich sind.

4. Verfahren nach einem der vorhergehenden Ansprüche, wobei im zweiten Schritt die mindestens eine Information über die Übertragungskanaleigenschaften zwischen der ersten und zweiten Hochfrequenz-Erfassungsstation (111, 112) oder über das Objekt (400), insbesondere die Entfernung und/oder die Position und/oder der Standort des Objekts (400), auf der Grundlage des Informationsgehalts des Hochfrequenz-Erfassungsempfangssignals (420) zusätzlich zu mindestens einer Information bestimmt wird, die sich auf die Hochfrequenz-Erfassungs- und Hochfrequenz-Erfassungsempfangssignale (410, 420) bezieht und von der ersten Hochfrequenz-Erfassungsstation (111) empfangen wird.

5. Verfahren nach einem der vorhergehenden Ansprüche, wobei die erste Hochfrequenz-Erfassungsstation (111) eine Basisstationseinheit eines Mobilkommunikationsnetzes (100) ist, insbesondere eine gNB-Station als Teil eines Funkzugangsnetzes des Mobilkommunikationsnetzes (100), wobei die erste Hochfrequenz-Erfassungsstation (111) insbesondere in der Lage ist, mindestens ein erstes Benutzergerät (21) zu versorgen, wobei das Hochfrequenz-Erfassungssignal (410) ein Hochfrequenzsignal ist oder diesem entspricht, das für Kommunikationszwecke zwischen der ersten Hochfrequenz-Erfassungsstation (111) und dem mindestens einen ersten Benutzergerät (21) erforderlich ist, wobei insbesondere das für Kommunikationszwecke zwischen der ersten Hochfrequenz-Erfassungsstation (111) und dem mindestens einen ersten Benutzergerät (21) erforderliche Hochfrequenzsignal einem Rundfunksignal entspricht, das insbesondere eine Systeminformation trägt.

6. Verfahren nach einem der vorhergehenden Ansprüche, wobei die zweite Hochfrequenz-Erfassungsstation (112) ebenfalls eine Basisstationseinheit eines Mobilkommunikationsnetzes (100) ist, insbesondere eine gNB-Station als Teil eines Funkzugangsnetzes des Mobilkommunikationsnetzes (100), wobei die zweite Hochfrequenz-Erfassungsstation (112) insbesondere in der Lage ist, mindestens ein zweites Benutzergerät (22) zu versorgen, wobei die zweite Hochfrequenz-Erfassungsstation (112) so konfiguriert ist, dass sie das Hochfrequenz-Erfassungsempfangssignal (420) empfängt, oder Mittel umfasst, um das Hochfrequenz-Erfassungsempfangssignal (420) zu empfangen, insbesondere das Hochfrequenz-Erfassungsempfangssignal (420) gleichzeitig mit einem Hochfrequenzsignal zu empfangen, das sich auf Kommunikationszwecke zwischen dem zweiten Benutzergerät (22) und der zweiten Hochfrequenz-Erfassungsstation (112) bezieht.

7. Verfahren nach einem der vorhergehenden Ansprüche, wobei die mindestens eine Information über die Übertragungskanaleigenschaften zwischen der ersten und zweiten Hochfrequenz-Erfassungsstation (111, 112) oder über das Objekt (400), insbesondere die Entfernung und/oder die Position und/oder der Standort des Objekts (400), einer Entität oder einem Netzwerkknoten des Mobilkommunikationsnetzes (100), insbesondere einer Berechnungsinstanz oder einer Speicherinstanz, zur Verfügung gestellt wird, wobei insbesondere der zweite Schritt von der zweiten Hochfrequenz-Erfassungsstation (112) oder von einer Entität oder einem Netzwerkknoten des Mobilkommunikationsnetzes (100), insbesondere einer Berechnungsinstanz, durchgeführt wird.

8. Verfahren nach einem der vorhergehenden Ansprüche, wobei die Übertragungsressourcen (111'), insbesondere die Zeitressourcen und/oder die Frequenzressourcen, die für die Übertragung des Hochfrequenz-Erfassungssignals (410) verwendet werden, der ersten Hochfrequenz-Erfassungsstation (111) in eindeutiger Weise innerhalb eines typischen Abdeckungsbereichs der ersten Hochfrequenz-Erfassungsstation (111) und/oder innerhalb eines Standortbereichs und/oder Verfolgungsbereichs zugewiesen oder zugeordnet sind, wobei insbesondere die Identität der ersten Hochfrequenz-Erfassungsstation (111) auf der Grundlage der Übertragungsressourcen (111') bestimmt werden kann, die für die Übertragung des Hochfrequenz-Erfassungssignals (410) verwendet werden.

9. Verfahren nach einem der vorhergehenden Ansprüche, wobei die maximale Signaldauer oder maximale Impulsdauer des Hochfrequenz-Erfassungssignals (410) 500 µs entspricht, vorzugsweise 250 µs, bevorzugter 125 µs, bevorzugter 62,5 µs und bevorzugter 50 µs oder weniger als 50 µs, und zusätzlich wobei die minimale Signaldauer oder minimale Impulsdauer des Hochfrequenz-Erfassungssignals (410) 0,1 µs entspricht, vorzugsweise 1 µs, bevorzugter 2 µs.

10. Verfahren nach einem der vorhergehenden Ansprüche, wobei sich das Objekt (400) in der Nähe sowohl der ersten als auch der zweiten Hochfrequenz-Erfassungsstation (111, 112) befindet, insbesondere innerhalb einer Entfernung vom mittleren Standort der ersten und zweiten Hochfrequenz-Erfassungsstation (111, 112) innerhalb des Zwei-, Drei- oder Vierfachen der Entfernung zwischen der ersten und zweiten Hochfrequenz-Erfassungsstation (111, 112).

11. Verfahren nach einem der vorhergehenden Ansprüche, wobei die erste Hochfrequenz-Erfassungsstation (111) als zweite Hochfrequenz-Erfassungsstation (112) fungiert und entweder die zweite Hochfrequenz-Erfassungsstation (112) oder eine weitere Hochfrequenz-Erfassungsstation als erste Hochfrequenz-Erfassungsstation (111) fungiert.

12. System oder Mobilkommunikationsnetz (100) zur Durchführung einer Hochfrequenz-Erfassung mit einer ersten Hochfrequenz-Erfassungsstation (111) und mindestens einer zweiten Hochfrequenz-Erfassungsstation (112) als Teil des Systems oder Mobilkommunikationsnetzes (100), wobei die erste Hochfrequenz-Erfassungsstation (111) ein Hochfrequenz-Erfassungssignal (410) überträgt, wobei infolge der Übertragung des Hochfrequenz-Erfassungssignals (410) ein Hochfrequenz-Erfassungsempfangssignal (420) von der zweiten Hochfrequenz-Erfassungsstation (112) empfangen wird, wobei das Hochfrequenz-Erfassungsempfangssignal (420) entspricht oder umfasst
- das direktpfadübertragene Hochfrequenz-Erfassungssignal (410), das es ermöglicht, auf der Grundlage des Hochfrequenz-Erfassungsempfangssignals (420) Informationen über Übertragungskanaleigenschaften zwischen der ersten und zweiten Hochfrequenz-Erfassungsstation (111, 112) abzuleiten, oder
- eine Reflexion des Hochfrequenz-Erfassungssignals (410), die es ermöglicht, auf der Grundlage des Hochfrequenz-Erfassungsempfangssignals (420) Informationen über ein Objekt (400) abzuleiten, das das Hochfrequenz-Erfassungssignal (410) reflektiert,
wobei das System oder Mobilkommunikationsnetz (100) zur Durchführung der Hochfrequenz-Erfassung so konfiguriert ist, dass:
- das Hochfrequenz-Erfassungssignal (410) von der ersten Hochfrequenz-Erfassungsstation (111) übertragen wird und das entsprechende Hochfrequenz-Erfassungsempfangssignal (420) von der zweiten Hochfrequenz-Erfassungsstation (112) empfangen wird, wobei das Hochfrequenz-Erfassungssignal (410) Übertragungsressourcen (111') verwendet, die spezifisch der ersten Hochfrequenz-Erfassungsstation (111) zugewiesen oder zugeordnet sind,
- auf der Grundlage des Hochfrequenz-Erfassungsempfangssignals (420) und eines Informationsgehalts, der vom Hochfrequenz-Erfassungsempfangssignal (420) getragen wird, mindestens eine Information abgeleitet wird,
wobei
- die mindestens eine Information die Information über die Übertragungskanaleigenschaften zwischen der ersten und zweiten Hochfrequenz-Erfassungsstation (111, 112) ist, wenn das Hochfrequenz-Erfassungsempfangssignal (420) dem direktpfadübertragenen Hochfrequenz-Erfassungssignal (410) entspricht oder dieses umfasst, oder
- die mindestens eine Information die Information über das Objekt (400) ist, wenn das Hochfrequenz-Erfassungsempfangssignal (420) der Reflexion des Hochfrequenz-Erfassungssignals (410) entspricht oder diese umfasst,
**dadurch gekennzeichnet, dass** das Hochfrequenz-Erfassungssignal (410) und folglich auch das Hochfrequenz-Erfassungsempfangssignal (420) so strukturiert ist, dass es den Informationsgehalt trägt, der einer Angabe über oder bezüglich des Standorts der ersten Hochfrequenz-Erfassungsstation (111), insbesondere ihrer Koordinaten und/oder Höhe, entspricht.

13. Hochfrequenz-Erfassungsstation (111, 112), die so konfiguriert ist, dass sie als erste Hochfrequenz-Erfassungsstation (111) und/oder als zweite Hochfrequenz-Erfassungsstation (112) für ein System oder für ein Mobilkommunikationsnetz nach Anspruch 12 verwendet werden kann.

14. Programm, das einen computerlesbaren Programmcode umfasst, der, wenn er teilweise auf einer ersten Hochfrequenz-Erfassungsstation (111) und teilweise auf einer zweiten Hochfrequenz-Erfassungsstation (112) ausgeführt wird, die erste und zweite Hochfrequenz-Erfassungsstation (111, 112) veranlasst, die Schritte durchzuführen, die entweder der ersten oder der zweiten Hochfrequenz-Erfassungsstation des Verfahrens nach einem der Ansprüche 1 bis 11 entsprechen.

15. Computerlesbares Medium, das Anweisungen umfasst, die, wenn sie auf einer ersten Hochfrequenz-Erfassungsstation (111) oder auf einer zweiten Hochfrequenz-Erfassungsstation (112) für ein Mobilkommunikationsnetz (100) ausgeführt werden, die erste oder zweite Hochfrequenz-Erfassungsstation (111, 112) veranlassen, die Verfahrensschritte durchzuführen, die entweder der ersten oder der zweiten Hochfrequenz-Erfassungsstation nach einem der Ansprüche 1 bis 11 entsprechen.

## Revendications

1. Procédé de réalisation d'une détection radiofréquence impliquant une première station de détection radiofréquence (111) et au moins une deuxième station de détection radiofréquence (112), dans lequel la première station de détection radiofréquence (111) transmet un signal de détection radiofréquence (410), dans lequel, suite à la transmission du signal de détection radiofréquence (410), un signal de réception de détection radiofréquence (420) est reçu par la deuxième station de détection radiofréquence (112), le signal de réception de détection radiofréquence (420) correspondant à ou comprenant
- le signal de détection radiofréquence transmis en trajet direct (410), permettant de dériver, sur la base du signal de réception de détection radiofréquence (420), des informations concernant les propriétés du canal de transmission entre la première et la deuxième station de détection radiofréquence (111, 112), ou
- une réflexion du signal de détection radiofréquence (410), permettant de dériver, sur la base du signal de réception de détection radiofréquence (420), des informations concernant un objet (400) qui réfléchit le signal de détection radiofréquence (410),
dans lequel, afin de réaliser la détection radiofréquence, le procédé comprend les étapes suivantes :
- dans une première étape, le signal de détection radiofréquence (410) est transmis par la première station de détection radiofréquence (111) et le signal de réception de détection radiofréquence (420) correspondant est reçu par la deuxième station de détection radiofréquence (112), dans lequel le signal de détection radiofréquence (410) utilise des ressources de transmission (111') spécifiquement attribuées ou associées à la première station de détection radiofréquence (111),
- dans une deuxième étape, sur la base du signal de réception de détection radiofréquence (420) et d'un contenu informationnel porté par le signal de réception de détection radiofréquence (420), au moins une information est dérivée, dans lequel
- la au moins une information est l'information concernant les propriétés du canal de transmission entre la première et la deuxième station de détection radiofréquence (111, 112), si le signal de réception de détection radiofréquence (420) correspond à ou comprend le signal de détection radiofréquence transmis en trajet direct (410), ou
- la au moins une information est l'information concernant l'objet (400), si le signal de réception de détection radiofréquence (420) correspond à ou comprend la réflexion du signal de détection radiofréquence (410),
**caractérisé en ce que** le signal de détection radiofréquence (410), et par conséquent aussi le signal de réception de détection radiofréquence (420), est structuré de telle sorte qu'il porte le contenu informationnel correspondant à une indication concernant ou relative à l'emplacement de la première station de détection radiofréquence (111), en particulier ses coordonnées et/ou sa hauteur.

2. Procédé selon la revendication 1, dans lequel le signal de détection radiofréquence (410) et/ou le signal de réception de détection radiofréquence (420) comprend ou utilise une structure de signal interopérable.

3. Procédé selon l'une des revendications précédentes, dans lequel, dans la deuxième étape, la au moins une information concernant les propriétés du canal de transmission entre la première et la deuxième station de détection radiofréquence (111, 112) ou concernant l'objet (400), en particulier la distance et/ou la position et/ou l'emplacement de l'objet (400), est déterminée sur la base, outre le contenu informationnel du signal de réception de détection radiofréquence (420), d'informations disponibles à la deuxième station de détection radiofréquence (112), ou accessibles par la deuxième station de détection radiofréquence (112).

4. Procédé selon l'une des revendications précédentes, dans lequel, dans la deuxième étape, la au moins une information concernant les propriétés du canal de transmission entre la première et la deuxième station de détection radiofréquence (111, 112) ou concernant l'objet (400), en particulier la distance et/ou la position et/ou l'emplacement de l'objet (400), est déterminée sur la base du contenu informationnel du signal de réception de détection radiofréquence (420) en plus d'au moins une information qui est liée aux signaux de détection radiofréquence et de réception de détection radiofréquence (410, 420) et reçue de la première station de détection radiofréquence (111).

5. Procédé selon l'une des revendications précédentes, dans lequel la première station de détection radiofréquence (111) est une entité de station de base d'un réseau de communication mobile (100), en particulier une station gNB faisant partie d'un réseau d'accès radio du réseau de communication mobile (100), la première station de détection radiofréquence (111) étant en particulier capable de desservir au moins un premier équipement utilisateur (21), dans lequel le signal de détection radiofréquence (410) est ou correspond à un signal radiofréquence requis à des fins de communication entre la première station de détection radiofréquence (111) et le au moins un premier équipement utilisateur (21), dans lequel en particulier le signal radiofréquence requis à des fins de communication entre la première station de détection radiofréquence (111) et le au moins un premier équipement utilisateur (21) correspond à un signal de diffusion, portant en particulier une information système.

6. Procédé selon l'une des revendications précédentes, dans lequel la deuxième station de détection radiofréquence (112) est également une entité de station de base d'un réseau de communication mobile (100), en particulier une station gNB faisant partie d'un réseau d'accès radio du réseau de communication mobile (100), la deuxième station de détection radiofréquence (112) étant en particulier capable de desservir au moins un deuxième équipement utilisateur (22), dans lequel la deuxième station de détection radiofréquence (112) est configurée de manière à, ou comprend des moyens pour, recevoir le signal de réception de détection radiofréquence (420), en particulier recevoir le signal de réception de détection radiofréquence (420) simultanément à un signal radiofréquence lié à des fins de communication entre le deuxième équipement utilisateur (22) et la deuxième station de détection radiofréquence (112).

7. Procédé selon l'une des revendications précédentes, dans lequel la au moins une information concernant les propriétés du canal de transmission entre la première et la deuxième station de détection radiofréquence (111, 112) ou concernant l'objet (400), en particulier la distance et/ou la position et/ou l'emplacement de l'objet (400), est fournie à une entité ou à un noeud de réseau du réseau de communication mobile (100), en particulier une instance de calcul ou une instance de stockage, dans lequel en particulier la deuxième étape est réalisée par la deuxième station de détection radiofréquence (112) ou par une entité ou un nœud de réseau du réseau de communication mobile (100), en particulier une instance de calcul.

8. Procédé selon l'une des revendications précédentes, dans lequel les ressources de transmission (111'), en particulier les ressources temporelles et/ou les ressources fréquentielles, utilisées pour transmettre le signal de détection radiofréquence (410) sont attribuées ou associées à la première station de détection radiofréquence (111) de manière unique dans une zone de couverture typique de la première station de détection radiofréquence (111) et/ou dans une zone de localisation et/ou zone de suivi, dans lequel en particulier l'identité de la première station de détection radiofréquence (111) peut être déterminée sur la base des ressources de transmission (111') utilisées pour transmettre le signal de détection radiofréquence (410).

9. Procédé selon l'une des revendications précédentes, dans lequel la durée du signal maximale ou la durée d'impulsion maximale du signal de détection radiofréquence (410) correspond à 500 µs, de préférence à 250 µs, de manière plus préférée à 125 µs, de manière plus préférée à 62,5 µs, et de manière plus préférée à 50 µs ou à moins de 50 µs, et en outre dans lequel la durée du signal minimale ou la durée d'impulsion minimale du signal de détection radiofréquence (410) correspond à 0,1 µs, de préférence à 1 µs, de manière plus préférée à 2 µs.

10. Procédé selon l'une des revendications précédentes, dans lequel l'objet (400) est situé à proximité de la première et de la deuxième station de détection radiofréquence (111, 112), en particulier dans une distance depuis l'emplacement central de la première et de la deuxième station de détection radiofréquence (111, 112) dans les deux fois ou trois fois ou quatre fois la distance entre la première et la deuxième station de détection radiofréquence (111, 112).

11. Procédé selon l'une des revendications précédentes, dans lequel la première station de détection radiofréquence (111) agit en tant que deuxième station de détection radiofréquence (112) et soit la deuxième station de détection radiofréquence (112) soit une autre station de détection radiofréquence agit en tant que première station de détection radiofréquence (111).

12. Système ou réseau de communication mobile (100) pour réaliser une détection radiofréquence impliquant une première station de détection radiofréquence (111) et au moins une deuxième station de détection radiofréquence (112) faisant partie du système ou du réseau de communication mobile (100), dans lequel la première station de détection radiofréquence (111) transmet un signal de détection radiofréquence (410), dans lequel, suite à la transmission du signal de détection radiofréquence (410), un signal de réception de détection radiofréquence (420) est reçu par la deuxième station de détection radiofréquence (112), le signal de réception de détection radiofréquence (420) correspondant à ou comprenant
- le signal de détection radiofréquence transmis en trajet direct (410), permettant de dériver, sur la base du signal de réception de détection radiofréquence (420), des informations concernant les propriétés du canal de transmission entre la première et la deuxième station de détection radiofréquence (111, 112), ou
- une réflexion du signal de détection radiofréquence (410), permettant de dériver, sur la base du signal de réception de détection radiofréquence (420), des informations concernant un objet (400) qui réfléchit le signal de détection radiofréquence (410),
dans lequel, afin de réaliser la détection radiofréquence, le système ou le réseau de communication mobile (100) est configuré de telle sorte que :
- le signal de détection radiofréquence (410) est transmis par la première station de détection radiofréquence (111) et le signal de réception de détection radiofréquence (420) correspondant est reçu par la deuxième station de détection radiofréquence (112), dans lequel le signal de détection radiofréquence (410) utilise des ressources de transmission (111') spécifiquement attribuées ou associées à la première station de détection radiofréquence (111),
- sur la base du signal de réception de détection radiofréquence (420) et d'un contenu informationnel porté par le signal de réception de détection radiofréquence (420), au moins une information est dérivée,
dans lequel
- la au moins une information est l'information concernant les propriétés du canal de transmission entre la première et la deuxième station de détection radiofréquence (111, 112), si le signal de réception de détection radiofréquence (420) correspond à ou comprend le signal de détection radiofréquence transmis en trajet direct (410), ou
- la au moins une information est l'information concernant l'objet (400), si le signal de réception de détection radiofréquence (420) correspond à ou comprend la réflexion du signal de détection radiofréquence (410),
**caractérisé en ce que** le signal de détection radiofréquence (410), et par conséquent aussi le signal de réception de détection radiofréquence (420), est structuré de telle sorte qu'il porte le contenu informationnel correspondant à une indication concernant ou relative à l'emplacement de la première station de détection radiofréquence (111), en particulier ses coordonnées et/ou sa hauteur.

13. Station de détection radiofréquence (111, 112) configurée pour être utilisée en tant que première station de détection radiofréquence (111) et/ou en tant que deuxième station de détection radiofréquence (112) pour un système ou pour un réseau de communication mobile selon la revendication 12.

14. Programme comprenant un code de programme lisible par ordinateur qui, lorsqu'il est exécuté en partie sur une première station de détection radiofréquence (111) et en partie sur une deuxième station de détection radiofréquence (112), amène la première et la deuxième station de détection radiofréquence (111, 112) à effectuer les étapes correspondant soit à la première soit à la deuxième station de détection radiofréquence du procédé selon l'une des revendications 1 à 11.

15. Support lisible par ordinateur comprenant des instructions qui, lorsqu'elles sont exécutées sur une première station de détection radiofréquence (111) ou sur une deuxième station de détection radiofréquence (112) pour un réseau de communication mobile (100), amènent la première ou la deuxième station de détection radiofréquence (111, 112) à effectuer les étapes du procédé correspondant soit à la première soit à la deuxième station de détection radiofréquence selon l'une des revendications 1 à 11.
